# EUROPEAN PATENT APPLICATION

(11) **EP 0 525 967 A1**
(43) Date of publication of application: **03.02.1993**
(21) Application number: 92305611.3
(22) Date of filing: 18.06.1992
(51) Int. Cl.: F02F 7/00

(54) **A method of assembling an internal combustion engine**

(30) Priority: 24.07.1991 GB 9115934
(71) Applicant: ROVER GROUP LIMITED, Bickenhill Birmingham B37 7HQ (GB)
(72) Inventor: Emery, Ralph Stewart, Bridgenorth, Shropshire WV16 5ND (GB); Stone, Roger Derrick, Cookhill, Alcester, Warwickshire (GB)
(74) Representative: Wilson, Alan Stuart

(57) **Abstract**

A method of assembling an internal combustion engine is disclosed in which long tensile members in the form of studs 16,17 are used to secure a cylinder head 1 and a crankshaft regaining means 4 to cylinder block 2.

Each of the studs 16,17 is threaded at first and second ends and has a driving means 32,34 formed on the second end by rolling at the same time as the thread forms on the first and second ends..

Upon assembly of the engine the studs 16,17 are held by means of the driving means 32,34 during tightening of the nuts 30,31 used to fix the cylinder head 1 to the cylinder block 2.

## Description

This invention relates to internal combustion engines and in particular to a method of assembling an internal combustion engine.

It is known for example from GB 2,187,791 to provide an internal combustion engine having tensile members for securing the cylinder head to the cylinder block, the tensile members extending to and being secured to retaining means for the crankshaft bearings, and having passageways extending through the block surrounding each tensile member, the passageways communicating both with the valve gear region of the cylinder head and with the crankcase region of the engine.

It is further known that when threaded members are yield tightened, thread friction effects the actual preload achieved.

According to the invention there is provided a method of assembling an internal combustion engine having a number of long tensile members each extending through a respective passage in a cylinder block for securing a cylinder head and a crankshaft bearing retaining means to the cylinder block each of said long tensile members being screw threaded at first and second ends, the method of assembly comprising the steps of:-
(a) threadingly engaging a nut with the second end of each tensile member;
(b) stacking said cylinder head, cylinder block and retaining means into their correct positions;
(c) inserting the long tensile members through the passageways in the cylinder block; wherein the tensile members have drive means formed on the second end and the method further comprises steps of
(d) rotating each tensile member a pre-determined number of revolutions by means of said drive means to threadingly engage the first end of each tensile member with said cylinder head or retaining means; and in that the method further comprises the steps of
(e) holding each tensile member by means of the drive means to prevent rotation of the tensile member during the tightening of each nut.

This has the advantage that there is no torsional wind up of the tensile members during tightening of the nuts thereby providing a more accurate and repeatable clamping force to be applied by the tensile members.

Preferably, the first end of each tensile member is threadingly engaged with the crankshaft retaining means.

Advantageously, each driven means is formed by rolling at the same time as the threads of said first and second ends are rolled.

The invention will now be described by way of example with reference to the following drawing of which:-
Figure 1: is a section through a multicylinder engine taken at right angles to the crankshaft axis and between a pair of cylinders;
Figure 2: is an enlarged view of the area 'A' on Figure 1 showing a fixing according to the invention.

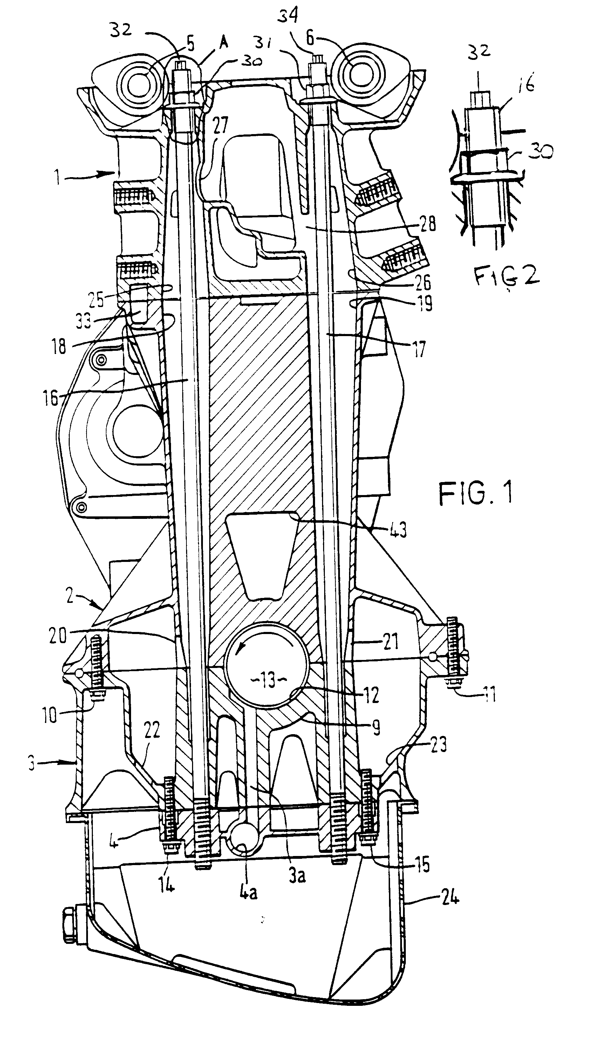

Referring to Figures 1 and 2 of the drawing the engine comprises a cylinder head 1, a cylinder block formed integrally with an upper part of a crankcase indicated generally by the reference numeral 2, a lower part of the crankcase indicated generally by the reference numeral 3, and a retaining member 4. Valve gear (not shown) operated by twin overhead camshafts 5 and 6 is provided.

The head and sections 2, 3, 4 of the engine are made of aluminium. The lower part of the crankcase 3 is formed integrally with the main bearing caps 9 and is secured to the upper part by bolts 10 and 11. The two parts of the crankcase are split about a plane perpendicular to the cylinder axes and passing through the centre of the crankshaft. The bearing caps house the usual bearing bushes 12 forming the main bearing for the crankshaft 13. The retaining member 4 is attached to the lower part of the crankcase 3 by means of bolts 14, 15.

Tensile members in the form of a number of steel studs 16, 17 threaded at first and second ends are provided to fix the cylinder hread 1 and retaining means 4 to the cylinder block 2 and crankcase. The first end of each stud 16, 17 is threadingly engaged with the retaining means 4 and the second end of each stud 16, 17 has a nut 30, 31 threadingly engaged to clamp the cylinder head 1 to the cylinder block 2.

The second end of each stud 16, 17 has driving means in the form of a splined drive 32, 34 formed thereon by rolling at the same time as the thread forms on the first and second ends.

Pressure pulsations on the combustion stroke, which tend to force the head 1 and crankshaft 13 apart, are reacted by the studs 16, 17, and the stresses do not pass through the wall of the block or crankcase, permitting the use of light low tensile materials such as aluminium for these parts.

The integral block and upper part of the crankcase 2 has a passageway 18, 19 surrounding each tensile member 16, 17. The passageways are tapered to facilitate their manufacture and, at the block/head interface are wide. At the lower end, the passageways are connected via slots 20, 21 with the crankcase region beneath the cylinders and via slots 22, 23 to the sump 24.

At the upper end, the passageways 18, 19 connect with corresponding tapered passageways 25, 26 in the head. Openings 27, 28, are provided to allow the passageways 25, 26 to communicate with the valve gear region of the head.

The passageways 18, 19 each extend from the crankcase to the valve gear region of the head and provide for crankcase ventilation of the volume beneath the pistons, and also allow the return of lubricating oil from the valve gear cover to the sump 24.

A large cooling channel 33 runs along one side of the block into which water is fed to provide a coolant feed for the head 1 and cylinder block 2.

The main bearings are lubricated by oil fed along a gallery 4a and a series of drillings 3a. The gallery 4a is supplied by a drilling into the gallery from an oil filter (not shown).

Assembly of the engine is as follows.

The nuts 30, 31 are preassembled onto the second end of the studs 16, 17 ready for use.

The crankcase 3 is preassembled to the cylinder block 2 and held in place by means of the bolts 10 and 11.

The retaining member 4 is secured to the crankcase 3 by means of the bolts 14, 15 and the cylinder head 1 is placed in position to complete the preassembly stacking of the engine.

The first end of each stud 16, 17 is inserted into the passageways 25, 26 in the head 1 and lowered down through passageways 18, 19 for engagement with the retaining means 4.

A lowered nut runner having a socket with a complimentary shaped aperture to the shape of the splined drive 32, 34 is then used to threadingly engage the first end of the studs 16, 17 with the retaining means 4 by rotating each of the studs 16, 17 a predetermined number of rotations.

The nuts 30, 31 are then tightened to a pre- determined torque while the splined drive 32, 34 is held to prevent rotation of the studs 16, 17.

In this way the studs 16, 17 are only subject to pure tension and not tension and torsion and therefore the clamping load between the head 1 and the retaining means 4 for a given tightening torque will be more consistent.

## Claims

1. A method of assembling an internal combusion engine having a number of long tensile members (16,17) each extending through a respective passage (18,19) in a cylinder block (2) for securing a cylinder head (1) and a crankshaft bearing retaining means (4) to the cylinder block (2) each of said long tensile members being screw threaded at first and second ends, the method of assembly comprising the steps of:-
(a) threadingly engaging a nut (30,31) with the second end of each tensile member;
(b) stacking said cylinder head (1) , cylinder block (2) and retaining means (4) into their correct positions;
(c) inserting the long tensile members (16,17) through the passageways (18,19) in the cylinder block; Characterised in that the tensile members have drive means formed on the second end and in that the method further comprises the steps of
(d) rotating each tensile number (16,17) a pre-determined number of revolutions by means of said drive means (32,34) to threadingly engage the first end of each tensile member with said cylinder head (1) or retaining means (4);
(e) holding each tensile member (16,17) by means of the drive means (32,34) to prevent rotation of the tensile member during the tightening of each nut.
